# EUROPÄISCHE PATENTSCHRIFT

(11) **EP 0 987 912 B1**
(45) Veröffentlichungstag und Bekanntmachung des Hinweises auf die Patenterteilung: **26.11.2008**
(21) Anmeldenummer: 99118406.0
(22) Anmeldetag: 16.09.1999
(51) Int. Cl.: H04Q 7/38

(54) **Verfahren und Anordnung zur Schnurloskommunikation mittels mindestens zwei Vermittlungsrechnern**
Method and system for wireless communication by at least two switching servers
Méthode et système pour communication sans fil par au moins deux serveurs de commutation

(30) Priorität: 18.09.1998 DE 19842851
(43) Veröffentlichungstag der Anmeldung: 22.03.2000
(73) Patentinhaber: Siemens Enterprise Communications GmbH & Co. KG, 81379 München (DE)
(72) Erfinder: Korpi, Markku, 82319 Starnberg (DE); Karapetkov, Stefan, Santa Clara, CA 95051 (US)
(74) Vertreter: Maier, Daniel Oliver

(56) Entgegenhaltungen:
- WO-A-96/18273
- WO-A-97/42781

## Beschreibung

Die Erfindung bezieht sich auf ein Verfahren und eine Anordnung, welche in Abhängigkeit eines Aufenthaltsortes eines Schnurlosendgerätes eine Verbindung zu diesem derart herstellen, daß für den Verbindungsaufbau automatisch derjenige Vermittlungsrechner kontaktiert wird, in dessen Schnurloskommunikationsbereich sich das Schnurlosendgerät derzeit aufhält, auch wenn von einem Kommunikationsteilnehmer, der eine Verbindung mit diesem Schnurlosendgerät wünscht, der Verbindungscode eines anderen Vermittlungsrechners eingegeben wurde.

In den vergangenen Jahren haben Schnurlosendgeräte, wie beispielsweise DECT-Telefone, auch in privaten Netzen immer mehr Verbreitung gefunden. Der DECT-Standard (Digital Enhanced Cordless Telephone) standardisiert lediglich die Luftschnittstelle zwischen einer Basisstation (Radio Fixed Part) und Endgerät (Portable Part). Wegen der häufig begrenzten Sendeleistung von Schnurlosendgeräten, ist deren Bewegungsspielraum auf den Sende- und Empfangsbereich einer jeweiligen Basisstation begrenzt. Um den Aktionsradius solcher mobilen Geräte zu erweitern, sind deshalb mehrere Basisstationen erforderlich deren Schnurloskommunikationsbereiche sich gegenseitig überlappen, oder mindestens aneinandergrenzen. Zur Abdeckung sehr großer Flächenbereiche für die Schnurloskommunikation, wie sie beispielsweise ausgedehnte Betriebsgelände oder Städte darstellen, ist es häufig notwendig, Basisstationen an unterschiedlichen Vermittlungsrechnern vorzusehen, um einen hinreichend großen Schnurloskommunikationsbereich für derartige Anwendungsfälle zur Verfügung zu haben. Die Systemstruktur derartiger Kommunikationsanordnungen und die eingesetzten Kommunikationsverfahren müssen sicherstellen, daß bei der Bewegung eines Schnurlosendgerätes durch die unterschiedlichen Schnurloskommunikationsbereiche sichergestellt wird, daß beim Übergang zwischen diesen Bereichen bei der Schnurloskommunikation hinsichtlich der Stabilität der Verbindung keine Probleme auftreten. Dieses Wandern durch verschiedene Schnurloskommunikationsbereiche wird in der Fachsprache auch Roaming genannt. Insbesondere muß bei einem derartigen Roaming sichergestellt werden, daß ein Schnurlosendgerät, das normalerweise über einen Kommunikationscode in Form einer Telefonnummer erreichbar ist, der eine Verbindung zu diesem Gerät über einen bestimmten Vermittlungsrechner durchschaltet, auch erreichbar ist, falls es sich im Schnurloskommunikationsbereich der Basisstation eines anderen Vermittlungsrechners befindet, der über eine andere Telefonnummer zu erreichen ist. Diese Problematik ist in einem derzeit am Markt erhältlichen Kommunikationssystem der Siemens AG vom Typ HICOM 300 durch eine spezielle Baugruppe gelöst, die in jedem Vermittlungsrechner vorhanden ist und die durch netzweite Kommunikation sicherstellt, daß ein Schnurlosendgerät beliebig roamen kann.

Im Sinne einer universellen Einsetzbarkeit von Vermittlungsrechnern ist es aber wünschenswert, andere Funktionen, als die reinen Schaltfunktionen aus dem Rechner auszulagern und Zusatzfunktionen im Sinne eines Client Server Konzeptes zu etablieren.

Aus der WO 96/18273 A ist ein Verfahren sowie eine Vorrichtung bekannt die einen Dienst zur Verfügung stellen, bei dem ein Schnurlosgerät, das außerhalb eines Kommunikationsbereichs einer Heimatvermittlungsstelle eine Verbindung unter Nutzung der Heimatvermittlungsstelle an der Vermittlungsstelle des aktuellen Kommunikationsbereichs aufgebaut wird.

Die der Erfindung zugrunde liegende Aufgabe besteht also darin, ein Verfahren und eine Anordnung anzugeben, welche die Einsetzbarkeit von möglichst universellen Vermittlungsrechnern, welche lediglich reine Schaltfunktionen durchführen, mit den benötigten Funktionen für großräumiges Roamen von Schnurlosendgeräten kombiniert.

Diese Aufgabe wird für das Verfahren gemäß den Merkmalen des Patentanspruches 1 und für die Anordnung gemäß den Merkmalen des Patentanspruches 7 gelöst. Weiterbildungen der Erfindung ergeben sich aus den abhängigen Ansprüchen.

Vorteilhaft werden beim Einsatz des erfindungsgemäßen Verfahrens Schnurlosverbindungsinformationen für ein Schnurlosendgerät in einem Mobilitätsserver bereitgehalten und mittels dieser Schnurlosverbindungsinformationen eine Verbindung zum Schnurlosendgerät hergestellt. Auf diese Weise wird erreicht, daß universelle Vermittlungsrechner einsetzbar sind und daß das Schnurlosendgerät immer über denjenigen Vermittlungsrechner erreichbar ist, in dessen Schnurloskommunikationsbereich es sich befindet, auch wenn ein Kommunikationsteilnehmer, der die Verbindung zu diesem Schnurlosendgerät aufbauen will, die Nummer eines anderen Vermittlungsrechners wählt.

Vorteilhaft steuert bei einer Weiterbildung des beschriebenen Verfahrens der Mobilitätsserver den Aufbau der Schnurlosverbindung mittels der Verbindungsinformation, weil auf diese Weise Standardschnittstellen für die Beeinflussung des Vermittlungsvorganges auf dem Vermittlungsrechner genutzt werden können und der technische Realisierungsaufwand zur Implementierung des Verfahrens gering bleibt.

Vorteilhaft wird bei einer Weiterbildung des beschriebenen Verfahrens vom Schnurlosendgerät eine Identitätsinformation abgegeben, welche von einer Basisstation an einem jeweiligen Vermittlungsrechner empfangen werden kann. Auf diese Weise kann sichergestellt werden, daß durch einfache Mittel eine Verbindungsnachricht erzeugt werden kann, über die der Vermittlungsrechner, über dessen Kommunikationscode dieses Schnurlosendgerät normalerweise erreichbar ist, erfährt, über welchen Verbindungsweg aktuell eine Verbindung zum Schnurlosendgerät aufgebaut werden kann.

Vorteilhaft wird bei einer Weiterbildung des beschriebenen Verfahrens mit Hilfe der Verbindungsnachricht, die von einem Vermittlungsredhner an einem anderen Vermittlungsrechner weitergegeben wurde, die Schnurlosverbindungsinformation im Mobilitätsserver aktualisiert, weil so auf technisch und konstruktiv einfache Weise die jederzeite Erreichbarkeit des Schnurlosendgerätes unabhängig von seinem Aufenthaltsort sichergestellt wird.

Vorteilhaft werden bei einer Weiterbildung des beschriebenen Verfahrens Leistungsmerkmale des jeweiligen Schnurlosendgerätes in einem Leistungsmerkmalserver bereitgestellt, der den Vermittlungsrechner abhängig von aktivierten Leistungsmerkmalen steuert, weil auf diese Weise standardisierte Schnittstellen zur Steuerung von Vermittlungsrechnern genutzt werden können und der Realisierungsaufwand für die Implementierung der Darstellung von Leistungsmerkmalen auf Schnurlosendgeräten gering bleibt, wobei gleichzeitig universelle Vermittlungsrechner eingesetzt werden können, die lediglich Schaltfunktionen ausüben.

Vorteilhaft wird bei einer Weiterbildung des beschriebenen Verfahrens vor dem Aufbau der Verbindung zum Schnurlosendgerät überprüft, ob ein Leistungsmerkmal aktiviert wurde, das den Verbindungsaufbau zu diesem Schnurlosendgerät überflüssig macht, wie beispielsweise die Rufumleitung zur Sekretärin, oder die Aktivierung einer Mailbox, das im jeweiligen Heimat-Vermittlungsrechner ausgeführt werden kann. An diesem geht der Verbindungswunsch und die Kommunikationsleitung, die diesen Verbindungswunsch überträgt ein. Auf diese Weise wird zum einen verhindert, daß die Netzlast, wegen des Aufbaus unnötiger Verbindungen ansteigt und zum anderen eine hohe Flexibilität bezüglich des Einsatzes unterschiedlichster Leistungsmerkmale im System gewährleistet.

Vorteilhaft werden bei einer Weiterbildung des beschriebenen Verfahrens unterschiedliche Vermittlungsrechner, deren Schnurloskommunikationsbereiche aneinandergrenzen, zu einer Gruppe zusammengefaßt, weil auf diese Weise die Bewegung des Schnurlosendgerätes innerhalb der Schnurloskommunikationsbereiche dieser Vermittlungsrechner unbeschränkt möglich ist und über das Verfahren sichergestellt wird, daß das Gerät jederzeit erreichbar ist. Vorteilhaft wird durch diese Verfahrensweise auch die Einrichtung abgegrenzter privater und öffentlicher Schnurloskommunikationsbereiche in beliebiger Größe ermöglicht.

Vorteilhaft ist der Einsatz einer Anordnung aus mindestens zwei Vermittlungsrechnern, die miteinander verbunden sind, einem Mobilitätsserver, der Verbindungsinformation zu einem Schnurlosendgerät enthält und an einen Vermittlungsrechner angeschlossen ist und einem Schnurlosendgerät. Diese Anordnung stellt die Minimalkonfiguration dar, mit der die Aufgabe der Erfindung gelöst wird und mit der eine Erreichbarkeit des Schnurlosendgerätes über den Verbindungsaufbau durch den Mobilitätsserver sichergestellt wird. Diese Anordnung ist attraktiv, weil sie mit technisch einfachen Mitteln das Problem der Erfindung löst.

Vorteilhaft sind bei einer Weiterbildung der beschriebenen Anordnung Mittel zur Abgabe und Mittel zur Aufnahme einer vom Schnurlosendgerät abgegebenen Identitätsinformation vorgesehen, woraus weitere Mittel in Verbindung mit Verbindungsinformation des jeweiligen Vermittlungsrechners eine Verbindungsnachricht erzeugen, die an andere Vermittlungsrechner weitergegeben werden kann, und die Erreichbarkeit des Schnurlosendgerätes sicherstellt. Durch diese Anordnung und diese Mittel wird auf einfache Weise die Erreichbarkeit des Schnurlosendgerätes innerhalb verschiedenster Schnurloskommunikationsbereiche von unterschiedlichen Vermittlungsrechnern über einen einzigen Kommunikationscode eines Heimatvermittlungsrechners dieses Schnurlosendgerätes sichergestellt.

Vorteilhaft ist bei einer Weiterbildung der beschriebenen Anordnung ein Leistungsmerkmalserver vorhanden, der verschiedenste Leistungsmerkmale bezüglich des Schnurlosendgerätes bereitstellt und den Vermittlungsrechner in Abhängigkeit dieser Leistungsmerkmale steuert. Auf diese Weise sind Vermittlungsrechner einsetzbar, die lediglich Schalt- und Vermittlungsfunktionen aufweisen und gleichzeitig unterschiedlichste Leistungsmerkmale bezüglich der Schnurlosendgeräte realisier- und darstellbar, wodurch eine höchst flexible universell einsetzbare Kommunikationsanordnung zur Verfügung gestellt wird.

Im Folgenden wird die Erfindung anhand von Figuren und Ausführungsbeispielen weiter erläutert.
Figur 1 zeigt eine erste Kommunikationsanordnung mit Leistungsmerkmalserver und Mobilitätsserver am selben Vermittlungsrechner,
Figur 2 zeigt eine zweite Kommunikationsanordnung mit Leistungsmerkmalserver an einem Vermittlungsrechner und Mobilitätsserver an einem anderen Vermittlungsrechner,
Figur 3 zeigt eine Kommunikationsanordnung mit Mobilitätsserver an einem Vermittlungsrechner und Leistungsmerkmalserver im Schnurlosendgerät,
Figur 4 zeigt eine Kommunikationsanordnung mit zwei Mobilitätsservern und einem Leistungsmerkmalserver,
Figur 5 zeigt eine Kommunikationsanordnung mit zwei Mobilitätsservern und Leistungsmerkmalserver im Schnurlosendgerät,
Figur 6 zeigt eine Realisierungsform der Anordnung über Leistungsmerkmalserver und Mobilitätsserver an einem Vermittlungsrechner unter Einsatz herkömmlich verwendeter Baugruppen.

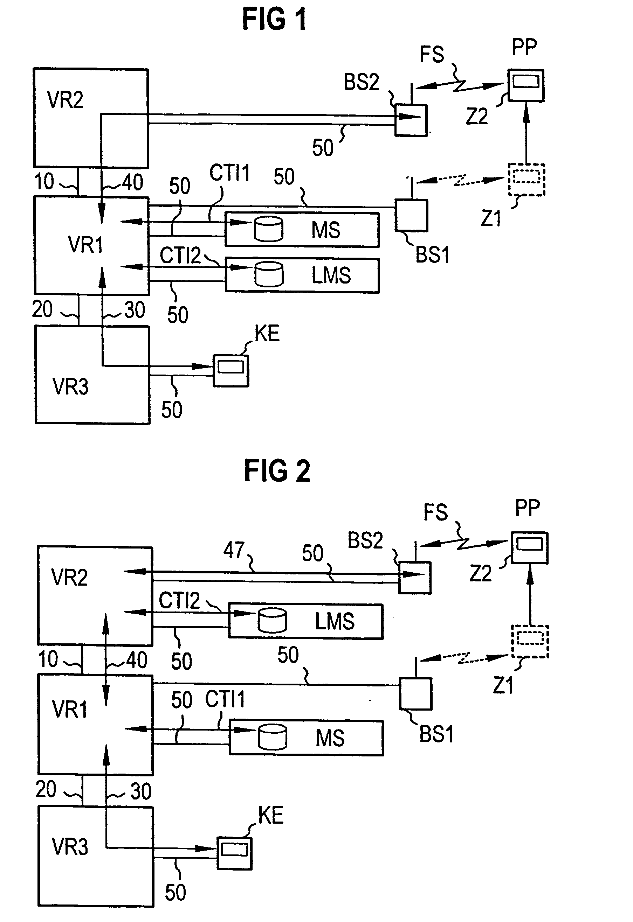

Figur 1 zeigt eine erste Kommunikationsanordnung mit Vermittlungsrechnern VR1 bis VR3, einem Leistungsmerkmalserver LMS, einem Mobilitätsserver MS, einem Schnurlosendgerät PP, Basisstationen BS1 und BS2, die an die jeweiligen Vermittlungsrechner angeschlossen sind und die Schnurloskommunikationsbereiche Z1 und Z2 aufweisen, in denen eine Funkverbindung FS etablierbar ist. Weiterhin ist ein Kommunikationsendgerät KE dargestellt, welches mit dem Schnurlosendgerät PP eine Kommunikationsverbindung aufbaut. Bei diesem Kommunikationsendgerät kann es sich sowohl um ein Schnurlosendgerät, als auch um ein drahtgebundenes Endgerät handeln. Zwischen den einzelnen Bestandteilen dieser Kommunikationsanordnungen sind Verbindungen 10 bis 40 und CTI1, sowie CTI2 vorgesehen.

Wie eingangs erwähnt, sollen möglichst universell einsetzbare Vermittlungsrechner verwendbar sein, die lediglich reine Schalt-. bzw. Vermittlungsfunktionen ausführen. In diesem Fall kann das Schnurlosendgerät PP am Vermittlungsrechner VR2 erreicht werden, indem vom Vermittlungsrechner VR1 eine Portverlängerung zur Basisstation BS2 durchgeführt wird. Beim Verbindungsaufbau zum Schnurlosendgerät PP geschieht dabei folgendes: Vom Kommunikationsendgerät KE aus wird ein Kommunikationscode für das Schnurlosendgerät PP eingegeben, welcher normalerweise eine Erreichbarkeit von PP über den Vermittlungsrechner VR1 und die Basisstation BS1 sicherstellt. Der Verbindungswunsch von KE gelangt nun auf 30 zum Vermittlungsrechner VR1. Dort wird beispielsweise über der Verbindungsleitung 50 der Mobilitätsserver MS bezüglich der Schnurlosverbindungsinformation von PP befragt. Es ergibt sich, daß sich PP augenblicklich nicht im Schnurloskommunikationsbereich von VR1 befindet, sondern im Schnurloskommunikationsbereich von VR2 und über die Basisstation BS2 im Schnurloskommunikationsbereich Z2 erreichbar ist. Der Vermittlungsrechner VR1 baut, gesteuert durch den Mobilitätsserver MS, die Verbindung zu VR2 über 40 und 50 zu BS2 auf. Es wird also eine Verbindung von KE, das beispielsweise über einen öffentlichen Vermittlungsrechner VR3 die Nebenstellenanlagen VR1 und VR2 erreicht, durch den Vermittlungsrechner VR1 und den Vermittlungsrechner VR2 transparent aufgebaut. Gesteuert wird der Verbindungsaufbau durch die Schnurlosverbindungsinformation, die im Mobilitätsserver MS bereitgehalten wird. Bevorzugt wird der Vermittlungsrechner über die Standardisierte Schnittstelle für Computertelefonintegration (CTI) gesteuert. Hier sind die Verbindungen vom Mobilitätsserver und vom Leistungsmerkmalserver mit CTI1 und CTI2 bezeichnet. Bei CTI handelt es sich um einen Oberbegriff für die Kommunikation zwischen Computer und Vermittlungsrechner. Der bekannteste Standard für CTI ist CSTA (Computer Supported Telekommunications Applications). Es gibt aber auch proprietäre Lösungen, wie beispielsweise ACL (Application Connectivity Link). Bevorzugt sind alle in einer jeweiligen Kommunikationsanordnung vorhandenen Vermittlungsrechner über gleichartige Schnittstellen durch die jeweiligen Server steuerbar. Auf diese Weise wird gewährleistet, daß beim Übergang von einem Vermittlungsrechner zum anderen Vermittlungsrechner, bzw. beim Vorhandensein von mehreren Servern keine Kompatibilitätsprobleme auftreten. Bevorzugt werden vom Schnurlosendgerät PP Identitätsinformationen abgegeben und, hier über die Funkstrecke FS, an die Basisstation BS2 weitergegeben. Der Vermittlungsrechner VR2 sendet diese Identitätsinformation zusammen mit seinen eigenen Verbindungsdaten in Form einer Verbindungsnachricht an andere Vermittlungsrechner, hier an VR1, welche diese Verbindungsnachricht dazu nutzen können, um die Schnurlosverbindungsinformation in ihrem Mobilitätsservern zu aktualisieren. Dieser Fall tritt beispielsweise auf, wenn das Schnurlosendgerät PP von einem Schnurloskommunikationsbereich Z1 der Basisstation BS1 und des Vermittlungsrechners VR1 in einen Schnurloskommunikationsbereich Z2 der Basisstation BS2 und des Vermittlungsrechners VR2 wechselt. Die Verbindungsnachricht und die Schnurlosverbindungsinformation im Mobilitätsserver können zyklisch verglichen werden und falls eine Diskrepanz auftritt, wird die aktuelle Information im Mobilitätsserver eingetragen. Durch den Leistungsmerkmalserver LMS, der über die Schnittstelle CTI2 an VR1 angeschlossen ist, werden Leistungsmerkmale für PP bereitgestellt. Solche Leistungsmerkmale können beispielsweise die Anrufumleitung, die Aktivierung einer Mailbox, oder die Anzeige von Gebühreneinheiten beinhalten. In Abhängigkeit aktivierter Leistungsmerkmale ist durch eine geeignete Verfahrensweise sicherzustellen, das beispielsweise keine Portverlängerung aktiviert wird, falls eine Anrufumleitung, bzw. die Aktivierung einer Mailbox eingeschaltet wurde. Hierzu sind durch das vorgeschlagene Verfahren Leistungsmerkmale priorisiert zu überprüfen, und nur solche Schnurlosverbindungen aufzubauen, deren Aufbau nicht im Widerspruch zu aktivierten Leistungsmerkmalen steht.

Mit der in Figur 1 gezeigten Anordnung sind Verlängerungsverbindungen in der Form einer Anschlußverlängerung, einer Rufverlängerung, und einer verlängerten Verbindung (Port Extension, Call Extension, Prolonging Connection) möglich. Hierdurch stehen Heimatdienste des Vermittlungsrechners VR1 auch auf anderen Vermittlungsrechnern, wie dem Vermittlungsrechner VR2 zur Verfügung. Einen weiteren Vorteil bietet diese Art der Anordnung, weil für die Steuerung der Schnurlosendgeräte in Zusammenarbeit mit dem Leistungsmerkmalserver LMS Tastaturprotokolle oder Stimulusprotokolle eingesetzt werden können, die einfach und leicht zu realisieren sind. Als Identitäsinformation beim Schnurlosendgerät kann beispielsweise die IPUI als International Portable User Identity, bzw. dessen Rufnummer dienen. Fallweise können auch weitere Daten in einem Anwenderprofil enthalten sein, welche beispielsweise auch in einer Datenbank auf dem Mobilitätsserver abgelegt sein können. Auf diese Weise wird eine hohe Flexibilität hinsichtlich der zu übertragenden Verbindungsnachricht erreicht und der Vergleichsvorgang zwischen den gespeicherten Schnurlosverbindungsinformationen und der Verbindungsnachricht flexibel und einfach gestaltet. Auch für den Fall, daß sich das Schnurlosendgerät PP nicht, wie hier gezeigt, im Schnurloskommunikationsbereich der Basisstation BS2 des Vermittlungsrechners VR2 befindet, sondern vielmehr im Schnurloskommunikationsbereich Z1 der Basisstation BS1 am Vermittlungsrechner VR1, wird der Aufbau der Schnurlosverbindung mit PP durch den Vermittlungsrechner VR1 durch den Mobilitätsserver MS über die Schnurlosverbindungsinformation gesteuert.

Wie Figur 2 im Unterschied zur Figur 1 zeigt, kann der Leistungsmerkmalserver LMS auch am Vermittlungsrechner VR2 über die Schnittstelle CTI2 angeschlossen sein. In diesem Falle wird ebenfalls davon ausgegangen, daß der Kommunikationsteilnehmer am Schnurlosendgerät über den Vermittlungsrechner VR1 zu erreichen ist. Die Schnurlosverbindungsinformation wird dabei vom Mobilitätsserver MS bereitgestellt, der am Vermittlungsrechner VR1 über die Schnittstelle CTI1 angeschlossen ist. In diesem Zusammenhang sei erwähnt, daß alle Bezugszeichen die gleich lauten, über die unterschiedlichen Figuren hinweg Anordnungsbestandteile mit der selben Funktion betreffen.

Mittels der Schnurlosverbindungsinformation wird vom Mobilitätsserver MS ein am Vermittlungsrechner VR1 ankommender Ruf für das Schnurlosendgerät PP zum Ziel, hier ist das Ziel VR2, verlängert. Auch vom Schnurlosendgerät PP abgehende Rufe werden in diesem Falle zunächst zum Vermittlungsrechner VR1 über Verbindungen 47 und 40 durchgestellt und dann zum gewünschten Ziel geleitet. Dabei werden die ankommenden/abgehenden Rufe im Vermittlungsrechner VR im Leistungsmerkmal bzw. im Mobilitätsserver geschaltet. Zum Mobilitätsserver werden lediglich beispielsweise Signalisierungsnachrichten, wie die Zieladresse übertragen, wobei bevorzugt die CTI-Schnittstelle zur Anwendung kommt. Anhand dieser Zieladresse kann der Mobilitätsserver dann feststellen, und zwar durch einen Vergleich mit den gespeicherten Daten, ob das Schnurlosendgerät sich im Schnurloskommunikationsbereich Z1 oder im Schnurloskommunikationsbereich Z2 befindet. In beiden Fällen veranlaßt der Mobilitätsserver den Vermittlungsrechner eine Verbindung zum Schnurlosendgerät PP aufzubauen. Im Unterschied zu der in Figur 1 dargestellten Anordnung werden die Leistungsmerkmale des Schnurlosendgerätes PP von einem Leistungsmerkmalserver LMS bereitgestellt, der an den Vermittlungsrechner VR2 angeschlossen ist.

Da sich Leistungsmerkmalserver, welche an unterschiedliche Vermittlungsrechner angeschlossen sind, hinsichtlich der bereitgestellten und verfügbaren Leistungsmerkmale unterscheiden können, besteht die Möglichkeit, daß innerhalb des Schnurloskommunikationsbereiches Z1 und innerhalb des Schnurloskommunikationsbereiches Z2 unterschiedliche Leistungsmerkmale zur Verfügung stehen. Diese Aussage gilt jedoch nur, falls an den verschiedenen Vermittlungsrechnern, im Gegensatz zur Darstellung in Figur 2 jeweils ein Leistungsmerkmalserver LMS angeschlossen ist und die jeweiligen Leistungsmerkmalserver an den verschiedenen Vermittlungsrechnern VR1, VR2 ein unterschiedliches Spektrum an Leistungsmerkmalen bereitstellen.

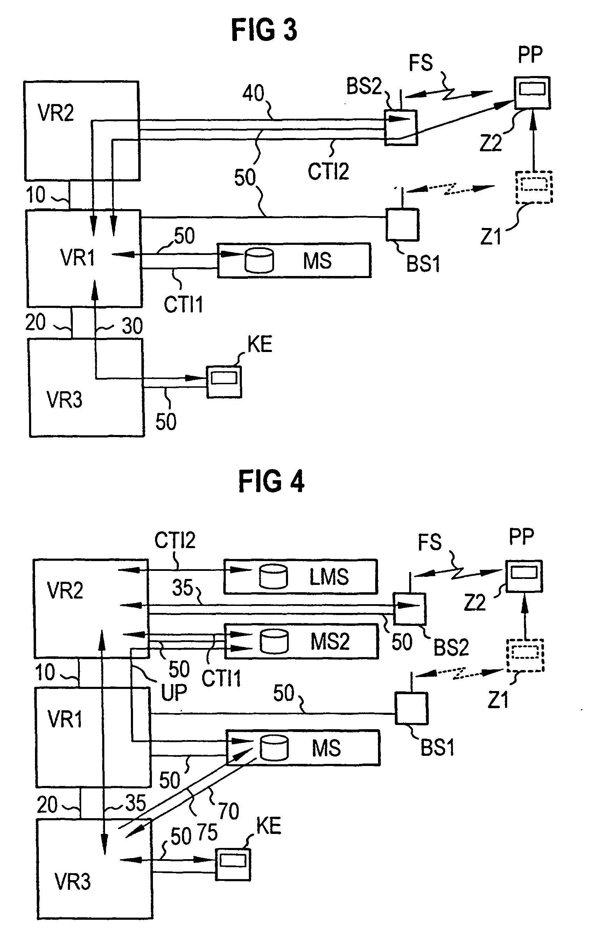

Figur 3 zeigt eine weitere Anordnung zur Schnurloskommunikation mittels zwei Vermittlungsrechnern, bei der der Leistungsmerkmalserver im Schnurlosendgerät PP integriert ist. Nachdem der Mobilitätsserver weiterhin am Vermittlungsrechner VR1 angeschlossen ist, wird von diesem demgemäß für eingehende Anrufe von KE, hier ist ein solcher mit 30 bezeichnet, zum entsprechenden Vermittlungsrechner, hier VR2, gemäß der Schnurlosverbindungsinformation im Mobilitätsserver MS verlängert. In der hier dargestellten Anordnung werden die Informationen über Leistungsmerkmale des Schnurlosendgerätes PP über eine Verlängerungsverbindung CTI2, welche durch die Basisstation BS2 hindurchgeht zum Schnurlosendgerät PP hin übertragen. In diesem Fall muß das Schnurlosendgerät genügend Intelligenz aufweisen, um die Informationen über CTI umzusetzen und gemäß spezifischer Leistungsmerkmale den Vermittlungsrechner VR1 zu steuern. Nebenbei sei bemerkt, daß die Verbindungsstrecke CTI2 lediglich eine logische Verbindung darstellt und nicht zwei Funkstrecken symbolisiert, wie man aus der Darstellung irrtümlich entnehmen könnte. Die Verbindung CTI2 kann demnach in der Funkstrecke FS enthalten sein.

Wie Figur 4 zeigt, gibt es auch Anordnungen, welche in anderen Kommunikationsnetzen eingesetzt werden, die anstatt von Verlängerungsverbindungen (Port Extension) die Rufumlenkung (Rerouting) unterstützen. Für diesen Fall werden zwei Mobilitätsserver gebraucht, MS und MS2. Bei dieser Anordnung wird für vom Kommunikationsendgerät KE eingehende Anrufe unter Umgehung des Vermittlungsrechners VR1 über Verbindungsleitungen 70 und 75 die Schnurlosverbindungsinformation vom Mobilitätsserver MS abgefragt und eine Verbindung direkt vom Vermittlungsrechner VR3 unter Umgehung von VR1 zu VR2 durchgeschaltet. Diese Verbindung ist in Figur 4 mit 35 bezeichnet.

Der Vermittlungsrechner VR2 wird für diesen Fall vom Mobilitätsserver MS2 gesteuert, der ebenfalls Schnurlosverbindungsinformationen bereitstellt. Dieser leitet dann den Ruf über 35 an die Basisstation BS2 und über diese zum Schnurlosendgerät PP weiter. Hier werden vom Vermittlungsrechner VR2 über CTI2 Informationen über die Leistungsmerkmale des Schnurlosendgerätes an den Leistungsmerkmalserver LMS weitergegeben. Gemäß der bereitzustellenden und aktualisierten Leistungsmerkmale steuert LMS den Vermittlungsrechner VR2 und legt damit fest, welche Leistungsmerkmale am Schnurlosendgerät PP realisierbar sind. Weil in diesem Fall keine Verbindungsverlängerung zum Vermittlungsrechner VR1 erfolgt, können vom Schnurlosendgerät PP aus nur solche Leistungsmerkmale aktiviert werden, welche im Leistungsmerkmalserver LMS vorgesehen sind. Aus diesem Grund kann es vorgesehen sein, daß am Schnurlosendgerät PP nur solche Leistungsmerkmale angezeigt werden, die über LMS auch aktivierbar sind. Für den Fall, daß, wie hier dargestellt, mehrere Mobilitätsserver MS und MS2 vorhanden sind, können zyklisch Aktualisierungen der Schnurlosverbindungsdaten /-informationen in den Mobilitätsservern durchgeführt werden. Dieser Sachverhalt ist über eine Verbindung UP zwischen MS2 und MS angedeutet. Für die Aktualisierung der Schnurlosverbindungsinformation auf den Mobilitätsservern können Standardprotokolle MAP (Mobile Application Protocol)oder CTM (Cordless Telephone Mobility) eingesetzt werden.

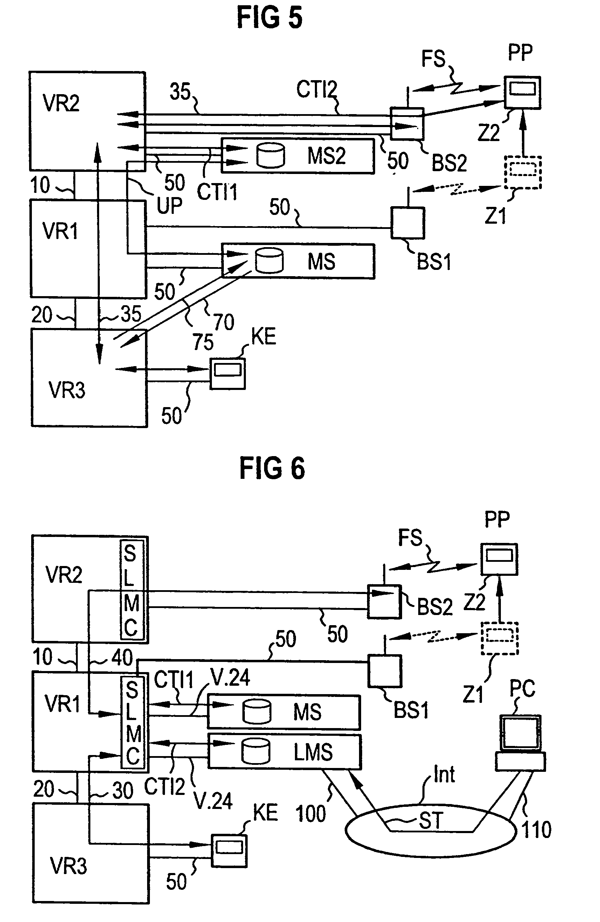

Figur 5 zeigt analog zur Darstellung in Figur 3 den Fall, in dem der Leistungsmerkmalserver im Schnurlosendgerät PP realisiert ist. Für den Fall, daß das Netz nicht Port Extension, sondern das Rerouting unterstützt. Beim Aufbau der Verbindung und beim Update der Mobilitätsserver gelten die selben Überlegungen, die bei der Anordnung in Figur 4 dargelegt wurden. Lediglich hinsichtlich der auf dem Schnurlosendgerät PP zur Verfügung stehenden Leistungsmerkmale ist in diesem Fall sichergestellt, daß das Schnurlosendgerät PP in jedem Schnurloskommunikationsbereich jedes Vermittlungsrechners über das selbe Leistungsmerkmalspektrum verfügt, weil der Leistungsmerkmalserver im Schnurlosendgerät integriert ist und die Leistungsmerkmale vom Schnurlosendgerät über CTI2 im Vermittlungsrechner VR2 angesteuert werden. In diesem Fall ist es besonders wichtig, daß alle Vermittlungsrechner VR das selbe CTI Protokoll unterstützen, da sonst die Steuerung der Leistungsmerkmale auf den unterschiedlichen Vermittlungsrechnern einmal funktioniert und ein anderes mal nicht. Wie hier gezeigt, sind für den Fall einer solchen Anordnung im gesamten Netz keinerlei weitere Leistungsmerkmalserver notwendig, da das Schnurlosendgerät den Leistungsmerkmalserver mit sich führt.

Wie in Figur 6 dargestellt ist, kann eine technische Realisierung der Erfindung als Beispiel in einem herkömmlichen Kommunikationssystem unter Verwendung einer Standardbaugruppe SLMC realisiert werden. In diesem speziellen Fall werden die Mobilitätsfunktionen und die Leistungsmerkmale durch einen Mobilitätsserver und einen Leistungsmerkmalserver über CTI-Schnittstellen CTI1 und CTI2 an der Baugruppe SLMC angesteuert. Diese Baugruppe übernimmt dann lediglich gemäß der Schnurlosverbindungsinformation im Mobilitätsserver MS den Aufbau der Verlängerungsverbindung zu einem weiteren Vermittlungsrechner, dargestellt ist hier die Verlängerung als Verbindung 40 zum Vermittlungsrechner VR2. Wie hier gezeigt wird, kann die CTI Schnittstelle über eine V24 Verbindung realisiert werden, die bereits standardmäßig am Vermittlungsrechner VR vorhanden ist. Zum Absenden von Elektronischer Post und zum Übertragen von Faksimile-Nachrichten, kann beispielsweise ein Rechner PC über Datenleitungen 210 an ein Datennetz INT angebunden sein, welches wiederum über eine weitere Leitung 100 an den Leistungsmerkmalserver LMS angebunden ist. Vom Rechner kann über ST ebenfalls die Bereitstellung von Leistungsmerkmalen auf LMS gesteuert werden.

## Patentansprüche

1. Verfahren zur Schnurloskommunikation mittels mindestens zwei Vermittlungsrechnern (VR) mit folgenden Merkmalen:
a) ein erstes Schnurlosendgerät (PP) ist mit einem ersten Kommunikationscode für einen ersten Vermittlungsrechner (VR1) verbindbar;
b) für den Fall, daß mit dem ersten Schnurlosendgerät (PP) über den ersten Kommunikationscode eine Kommunikationsverbindung (30, 40, 47, 35) aufgebaut werden soll, wird mittels eines Mobilitätsservers (MS), der Schnurlosverbindungsinformation über das erste Schnurlosendgerät (PP) bereithält, überprüft, ob sich das erste Schnurlosendgerät (PP) im ersten Schnurloskommunikationsbereich (Z1) des ersten Vermittlungsrechners (VR1) befindet, falls nicht, wird mittels der Schnurlosverbindungsinformation eine Schnurlosverbindung über einen zweiten Vermittlungsrechner (VR2) aufgebaut
c) bei dem von einem Leistungsmerkmalserver (LMS) Leistungsmerkmale für ein Schnurlosendgerät (PP) bereitgestellt werden, und der Leistungsmerkmalserver (LMS) den Vermittlungsrechner (VR) gemäß einem aktivierten Leistungsmerkmal steuert, wobei
d) vor dem Aufbau der Schnurlosverbindung zum Schnurlosendgerät(PP) überprüft wird, ob ein aktiviertes Leistungsmerkmal den Verbindungsaufbau zum Schnurlosendgerät (PP) erübrigt und für diesen Fall dieses Leistungsmerkmal priorisiert ausgeführt wird.

2. Verfahren nach Anspruch 1, bei dem der Mobilitätsserver (MS) den Aufbau der Schnurlosverbindung mittels der Schnurlosverbindungsinformation am Vermittlungsrechner (VR1) steuert.

3. Verfahren nach einem der vorangehenden Ansprüche,
a) bei dem das Schnurlosendgerät (PP) eine Identitätsinformation abgibt und diese Identitätsinformation Bestandteil der Schnurlosverbindungsinformation ist;
b) bei dem diese Identitätsinformation von einer an einem zweiten Vermittlungsrechner (VR2) angeschlossenen zweiten Schnurlosbasisstation (BS1) empfangen wird und vom zweiten Vermittlungsrechner (VR2) an mindestens einen weiteren Vermittlungsrechner zusammen mit Verbindungsinformationen zum erreichen der zweiten Basisstation (BS2) in Form einer Verbindungsnachricht übertragen wird.

4. Verfahren nach Anspruch 3, bei dem mindestens ein Mobilitätsserver (MS) von einem Vermittlungsrechner (VR) die Verbindungsnachricht erhält, damit die Schnurlosverbindungsinformation aktualisiert und für den Fall, daß der Vermittlungsrechner (VR) an den er angeschlossen ist, den ersten Kommunikationscode erhält, eine Verbindung zu der Basisstation am zweiten Vermittlungsrechner (VR2) aufbaut.

5. Verfahren nach einem der vorangehenden Ansprüche, bei dem von einer beschränkten Anzahl von Vermittlungsrechnern (VR1, VR2, VR3) deren Schnurloskommunikationsbereiche mindestens aneinander grenzen, eine Schnurloskommunikationsgruppe gebildet wird, innerhalb der die Verbindungsnachricht übermittelt wird.

6. Anordnung zur Schnurloskommunikation mittels mindestens zwei Vermittlungsrechnern mit folgenden Merkmalen:
a) sie weist mindestens einen ersten Vermittlungsrechner (VR1) und einen zweiten Vermittlungsrechner (VR2) auf, die miteinander verbunden sind.
b) der erste Vermittlungsrechner (VR1) und der zweite Vermittlungsrechner (VR2) haben jeweils einen ersten Schnurloskommunikationsbereich (Z1), bzw. einen zweiten Schnurloskommunikationsbereich (Z2) in dem Schnurlosendgeräte (PP) erreichbar sind;
c) sie weist ein erstes Schnurlosendgerät (PP) auf;
d) sie weist einen Mobilitätsserver (MS) auf, der mit einem Vermittlungsrechner (VR) verbunden ist und der Schnurlosverbindungsinformationen für Schnurlosendgeräte bereithält und der den Aufbau einer Verbindung gemäß der Schnurlosverbindungsinformation über den ersten oder zweiten Vermittlungsrechner (VR1, VR2) steuert,
e) es ist ein Leistungsmerkmalserver (LMS) vorhanden, der mit einem Vermittlungsrechner (VR) verbunden ist und der in Abhängigkeit eines bereitzustellenden Leistungsmerkmales für das Schnurlosendgerät (PP) den Vermittlungsrechner (VR) steuert, und dies derart ausgestaltet ist, dass vor dem Aufbau der Schnurlosverbindung zum Schnurlosendgerät(PP) überprüft wird, ob ein aktiviertes Leistungsmerkmal den Verbindungsaufbau zum Schnurlosendgerät (PP) erübrigt und für diesen Fall dieses Leistungsmerkmal priorisiert ausgeführt wird.

7. Anordnung nach Anspruch 6,
a) bei der das Schnurlosendgerät (PP) erste Mittel zur Abgabe einer Identitätsinformation aufweist,
b) bei der zweite Mittel vorhanden sind, mit denen der Aufenthalt des Schnurlosendgerätes (PP) im ersten oder zweiten Schnurloskommunikationsbereich (Z1, Z2) festgestellt wird,
c) bei der dritte Mittel vorhanden sind, zur Erzeugung einer Verbindungsnachricht in Abhängigkeit des durch die zweiten Mittel festgestellten Schnurloskommunikationsbereiches (Z) und der Identitätsinformation,
d) und bei der Mittel vorhanden sind zur Weitergabe der Verbindungsnachricht an mindestens den jeweils anderen Vermittlungsrechner (VR).

## Claims

1. Method for wireless communication by means of at least two switching processors (VR), having the following features:
a) a first wireless terminal device (PP) can be connected by means of a first communication code for a first switching processor (VR1) ;
b) in the event that a communication connection (30, 40, 47, 35) is to be set up to the first wireless terminal device (PP) by way of the first communication code a check is made by means of a mobility server (MS) which keeps available wireless connection information relating to the first wireless terminal device (PP) in order to determine whether the first wireless terminal device (PP) is located in the first wireless communication zone (Z1) of the first switching processor (VR1); if this is not the case, the wireless connection information is used to set up a wireless connection by way of a second switching processor (VR2);
c) wherein service features are provided for a wireless terminal device (PP) by a service feature server (LMS) and the service feature server (LMS) controls the switching processor (VR) in accordance with an activated service feature, with
d) a check being made before the wireless connection to the wireless terminal device (PP) is set up in order to determine whether an activated service feature makes the connection setup to the wireless terminal device (PP) superfluous and if this is the case said service feature is executed as a priority.

2. Method according to claim 1, wherein the mobility server (MS) controls the setup of the wireless connection by means of the wireless connection information at the switching processor (VR1).

3. Method according to one of the preceding claims,
a) wherein the wireless terminal device (PP) outputs identity information and said identity information is part of the wireless connection information;
b) wherein said identity information is received by a second wireless base station (BS1) connected to a second switching processor (VR2) and is transmitted by the second switching processor (VR2) to at least one further switching processor together with connection information for reaching the second base station (BS2) in the form of a connection message.

4. Method according to claim 3, wherein at least one mobility server (MS) receives the connection message from a switching processor (VR) so that the wireless connection information can be updated and in the event that the switching processor (VR) to which it is connected receives the first communication code sets up a connection to the base station at the second switching processor (VR2).

5. Method according to one of the preceding claims, wherein a limited number of switching processors (VR1, VR2, VR3) whose wireless communication zones at least adjoin one another form a wireless communication group within which the connection message is transmitted.

6. Arrangement for wireless communication by means of at least two switching processors, said arrangement having the following features:
a) it has at least a first switching processor (VR1) and a second switching processor (VR2) which are connected to each other;
b) the first switching processor (VR1) and the second switching processor (VR2) have, respectively, a first wireless communication zone (Z1) and a second communication zone (Z2) in which wireless terminal devices (PP) are reachable;
c) it has a first wireless terminal device (PP);
d) it has a mobility server (MS) which is connected to a switching processor (VR) and which keeps wireless connection information available for wireless terminal devices, and which controls the setup of a connection in accordance with the wireless connection information by way of the first or second switching processor (VR1, VR2),
e) a service feature server (LMS) is present which is connected to a switching processor (VR) and which controls the switching processor (VR) in accordance with a service feature that is to be provided for the wireless terminal device (PP), and this is embodied in such a way that a check is made before the wireless connection to the wireless terminal device (PP) is set up in order to determine whether an activated service feature makes the connection setup to the wireless terminal device (PP) superfluous and if this is the case said service feature is executed as a priority.

7. Arrangement according to claim 6,
a) wherein the wireless terminal device (PP) has first means for outputting identity information,
b) wherein second means are present with which the residence of the wireless terminal device (PP) in the first or second wireless communication zone (Z1, Z2) is established,
c) wherein third means are present for the purpose of generating a connection message according to the wireless communication zone (Z) established by the second means and the identity information, and
d) wherein means are present for forwarding the connection message to at least the other switching processor (VR) in each case.

## Revendications

1. Procédé pour la communication sans fil au moyen d'au moins deux serveurs de commutation (VR), comprenant les caractéristiques suivantes :
a) un premier terminal sans fil (PP) est connectable à l'aide d'un premier code de communication pour un premier serveur de commutation (VR1) ;
b) pour le cas où une liaison de communication (30, 40, 47, 35) doive être établie avec le premier terminal sans fil (PP) par l'intermédiaire du premier code de communication, il est vérifié au moyen d'un serveur de mobilité (MS) qui fournit une information de liaison sans fil par l'intermédiaire du premier terminal sans fil (PP), si le premier terminal sans fil (PP) se trouve dans la première zone de communication sans fil (Z1) du premier serveur de commutation (VR1), si ce n'est pas le cas, une liaison sans fil étant établie au moyen de l'information de liaison sans fil par l'intermédiaire d'un second serveur de commutation (VR2),
c) dans lequel des services sont fournis pour un terminal sans fil (PP) par un serveur de services (LMS), et dans lequel le serveur de services (LMS) commande le serveur de commutation (VR) selon un service activé,
d) une vérification étant effectuée avant l'établissement de la liaison sans fil vers le terminal sans fil (PP) afin de constater si un service activé rend inutile l'établissement de liaison vers le terminal sans fil (PP) et, dans ce cas, ce service étant exécuté de manière prioritaire.

2. Procédé selon la revendication 1, dans lequel le serveur de mobilité (MS) commande sur le serveur de commutation (VR1) l'établissement de la liaison sans fil au moyen de l'information de liaison sans fil.

3. Procédé selon 1"une quelconque des revendications précédentes,
a) dans lequel le terminal sans fil (PP) sort une information d'identité et dans lequel cette information d'identité fait partie de l'information de liaison sans fil ;
b) dans lequel cette information d'identité est reçue par une seconde station de base sans fil (BS1) raccordée à un second serveur de commutation (VR2) et est transmise, avec des informations de liaison, sous forme d'un message de liaison à au moins un autre serveur de commutation pour atteindre la seconde station de base (BS2).

4. Procédé selon la revendication 3, dans lequel au moins un serveur de mobilité (MS) reçoit d'un serveur de commutation (VR) le message de liaison afin que l'information de liaison sans fil soit mise à jour, et au cas où le serveur de commutation (VR), auquel il est raccordé, reçoive le premier code de communication, une liaison est établie sur le second serveur de commutation (VR2) vers la station de base.

5. Procédé selon l'une quelconque des revendications précédentes, dans lequel un groupe de communications sans fil est formé par un nombre limité de serveurs de commutation (VR1, VR2, VR3) dont les zones de communication sans fil sont au moins mutuellement limitrophes, à l'intérieur duquel groupe le message de liaison est transmis.

6. Dispositif pour la communication sans fil au moyen d'au moins deux serveurs de commutation, comprenant les caractéristiques suivantes :
a) il présente au moins un premier serveur de commutation (VR1) et un second serveur de commutation (VR2) qui sont raccordés entre eux ;
b) le premier serveur de commutation (VR1) et le second serveur de commutation (VR2) ont respectivement une première zone de communication sans fil (Z1), resp. une seconde zone de communication sans fil (Z2), dans laquelle des terminaux sans fil (PP) sont joignables ;
c) il présente un premier terminal sans fil (PP) ;
d) il présente un serveur de mobilité (MS) qui est raccordé à un serveur de commutation (VR) et fournit des informations de liaison sans fil pour des terminaux sans fil et qui commande l'établissement d'une liaison selon l'information de liaison sans fil par l'intermédiaire du premier ou du second serveur de commutation (VR1, VR2),
e) un serveur de services (LMS) est présent, qui est raccordé à un serveur de commutation (VR) et qui commande le serveur de commutation (VR) en fonction d'un service à fournir pour le terminal sans fil (PP), et qui est conçu de telle manière qu'avant l'établissement de la liaison sans fil vers le terminal sans fil (PP), il est vérifié si un service activé rend inutile l'établissement de liaison vers le terminal sans fil (PP) et, pour ce cas, ce service étant exécuté de manière prioritaire.

7. Dispositif selon la revendication 6,
a) dans lequel le terminal sans fil (PP) présente des premiers moyens pour sortir une information d'identité,
b) dans lequel des deuxièmes moyens sont présents, à l'aide desquels la localisation du terminal sans fil (PP) est constatée dans la première ou dans la seconde zone de communication sans fil (Z1, Z2),
c) dans lequel des troisièmes moyens sont présents pour générer un message de liaison, en fonction de la zone de communication sans fil (Z) constatée par les deuxièmes moyens, et de l'information d'identité,
d) et dans lequel des moyens sont présents pour le transfert du message de liaison à au moins l'autre serveur de commutation respectif (VR).
